# FASCICULE DE BREVET EUROPEEN

(11) **EP 2 597 031 B1**
(45) Date de publication et mention de la délivrance du brevet: **11.06.2014**
(21) Numéro de dépôt: 12193417.8
(22) Date de dépôt: 20.11.2012
(51) Int. Cl.: B64B 1/40

(54) **Ballon comprenant des moyens photovoltaïques et un dispositif de concentration solaire**
Ballon mit photovoltaischen Mitteln und eine Vorrichtung zu Bündeln des Sonnenlichts
Balloon comprising photovoltaic means and an apparatus for concentrating sun light

(30) Priorité: 22.11.2011 FR 1103552
(43) Date de publication de la demande: 29.05.2013
(73) Titulaire: Thales, 92200 Neuilly Sur Seine (FR)
(72) Inventeur: Chessel, Jean-Philippe, 06210 Mandelieu (FR); Prost, Jean-Pierre, 06650 Opio (FR)
(74) Mandataire: Esselin, Sophie

(56) Documents cités:
- WO-A2-2011/117619
- US-A- 4 174 082
- US-A- 4 262 864
- US-A- 4 534 525
- US-A1- 2010 229 850

## Description

Le domaine de l'invention est celui des ballons et notamment des ballons stratosphériques. De manière générale, les ballons présentent un fort potentiel d'application non seulement en raison de leurs faibles coûts par rapport à ceux des antennes terrestres ou à ceux des satellites mais également en raison des altitudes auxquelles ils peuvent oeuvrer. La stratosphère est inaccessible aux satellites et est traversée trop rapidement par les fusées-sondes. Les ballons, ou aérostats selon la terminologie scientifique, peuvent évoluer durablement dans cette couche dite «moyenne » de l'atmosphère, s'étendant entre 12 et 45 km d'altitude, les rendant particulièrement prometteurs, pour répondre à un ensemble d'applications et notamment dans le domaine des télécommunications.

Historiquement, les ballons ont été utilisés pour l'étude de l'atmosphère et l'astronomie. Le développement des activités spatiales a permis d'en élargir le champ d'application, de nombreux vols de ballons ont aujourd'hui une finalité technologique, testant par exemple des instruments destinés à être embarqués à bord de satellites.

Cependant deux problèmes se posent en général pour ce genre de ballon :
- d'une part il existe un problème de sustentation, solutionné par un volume d'enveloppe adéquat ;
- d'autre part un problème de propulsion pour piloter le ballon, qui nécessite le recours à une source d'énergie, en générale électrique, fournie par des cellules photovoltaïques à partir d'énergie solaire.

De manière générale, pour qu'un ballon stratosphérique dirigé soit autonome à poste sur une durée de plusieurs mois, il est nécessaire qu'il produise son énergie à l'aide de cellules photovoltaïques. Dans des conditions de vent stratosphérique, typiquement supérieure à 10 m/s, et pour une mission en continue, l'énergie électrique produite le jour est stockée pour être utilisée la nuit. La production d'électricité de jour atteint rapidement plusieurs dizaines de kilowatts, soit plusieurs centaines de m² de cellules photovoltaïques, et donc plusieurs centaines de kilogrammes. Le bilan de masse est l'élément majeur de la faisabilité d'un ballon stratosphérique, car plus la masse à emporter est élevée, plus la taille du ballon est importante, plus sa résistance au vent est élevée, et plus il faut d'énergie électrique pour alimenter les moteurs qui à poste luttent contre le vent pour maintenir la position à poste du ballon.

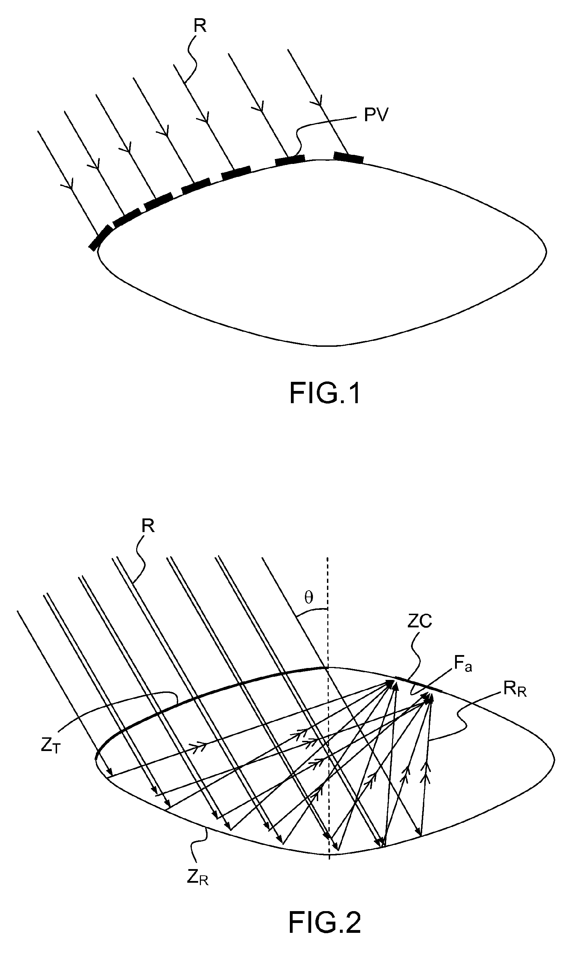

Les solutions actuelles conduisent à couvrir la surface supérieure du ballon de cellules photovoltaïques avec un bilan de masse défavorable comme illustré en figure 1 qui schématise un ballon de l'art antérieur comprenant sur une surface importante des cellules photovoltaïques PV capables de capter des rayons solaires R pour les convertir en énergie électrique.

Il est notamment connu du document US 2010/0229850 une solution proposant un ballon équipé de moyens photovoltaïques présentant une face active destinée à recevoir des rayons solaires et comprenant une enveloppe comprenant une zone transparente aux rayons solaires et une zone comportant lesdits moyens photovoltaïques dont la face active est dirigée vers l'intérieur de ladite enveloppe.

Dans ce contexte, la présente invention propose une solution dans laquelle, l'énergie solaire reçue par le ballon est concentrée sur une surface plus petite afin de réduire le nombre de cellules photovoltaïques nécessaires à la génération d'une quantité d'énergie électrique donnée, permettant ainsi d'alléger le poids de l'ensemble.

Plus précisément, la présente invention a pour objet un ballon équipé de moyens photovoltaïques présentant une face active destinée à recevoir des rayons solaires et comportant une enveloppe **caractérisé en ce que** l'enveloppe comprend au moins :
- une première zone transparente aux rayons solaires ;
- une seconde zone réfléchissante pour lesdits rayons solaires ;
- une troisième zone comprenant lesdits moyens photovoltaïques dont la face active est dirigée vers l'intérieur de ladite enveloppe ;
- les seconde et troisième zones étant positionnées et coopérant de manière à renvoyer les rayons solaires en direction de ladite troisième zone.

Selon une variante de l'invention, les moyens photovoltaïques sont des panneaux photovoltaïques.

Selon une variante de l'invention, le ballon comprend une première zone réfléchissante et une seconde zone réfléchissante, ladite première zone réfléchissante renvoyant les rayons solaires en direction de ladite seconde zone réfléchissante et ladite seconde zone réfléchissante et ladite troisième zone étant positionnées pour coopérer de manière à renvoyer les rayons solaires en direction de ladite troisième zone.

Selon une variante de l'invention, les moyens photovoltaïques sont positionnés à l'extérieur de l'enveloppe, la troisième zone étant au moins partiellement transparente aux rayons solaires. Avantageusement, le ballon peut comprendre en outre une sous-enveloppe localisée au niveau de ladite troisième zone permettant de protéger ladite troisième zone du rayonnement réfléchi concentré de rayons solaires.

Selon une variante de l'invention, les moyens photovoltaïques sont positionnés à l'intérieur de l'enveloppe.

Selon une variante de l'invention, les moyens photovoltaïques sont positionnés dans une ouverture réalisée dans l'enveloppe.

Selon une variante de l'invention, la zone réfléchissante présente une forme apte à concentrer les rayons solaires en direction de ladite troisième zone.

Selon une variante de l'invention, l'enveloppe présente une forme parabolique.

Selon une variante de l'invention, la zone réfléchissante présente une surface parabolique.

Selon une variante de l'invention, la forme de l'enveloppe peut être adaptée pour optimiser la portance.

Selon une variante de l'invention, l'enveloppe comprend une première peau et une seconde peau comprenant la zone réfléchissante à l'intérieur de l'enveloppe.

Selon une variante de l'invention, la forme de la première peau de l'enveloppe et la forme de la seconde peau de l'enveloppe comprenant la zone réfléchissante sont différentes, la forme de la première peau de l'enveloppe étant optimisée pour la portance, la forme de la seconde peau de l'enveloppe étant optimisée pour la concentration des rayons solaires

L'invention sera mieux comprise et d'autres avantages apparaîtront à la lecture de la description qui va suivre donnée à titre non limitatif et grâce aux figures annexées parmi lesquelles :
- la figure 1 illustre le schéma d'un ballon stratosphérique selon l'art connu ;
- la figure 2 schématise un ballon selon la présente invention.

La présente invention va être décrite ci-après dans le cadre d'un ballon stratosphérique mais pourrait aussi être appliquée à toute sorte de ballon. De manière générale, le ballon stratosphérique comprend une enveloppe en surpression gonflée à l'hélium. Dans le cadre de l'invention, ladite enveloppe, comprend au moins une première zone transparente pour laisser passer les rayons solaires, une seconde zone réfléchissante pour renvoyer les rayons vers une troisième zone comprenant des moyens constitués de cellules photovoltaïques orientées de telle façon que leurs faces actives de détection soient dirigées vers l'intérieur du ballon.

La forme de la surface réfléchissante peut être adaptée de façon à concentrer les rayons solaires sur lesdites cellules photovoltaïques.

La figure 2 schématise ainsi le ballon de l'invention qui présente une enveloppe. L'enveloppe comprend une première zone transparente ZT aux rayons solaires R, une seconde zone réfléchissante ZR pour lesdits rayons solaires et une troisième zone ZC comprenant lesdites cellules photovoltaïques dont la face active Fa est dirigée vers l'intérieur de ladite enveloppe. Les seconde et troisième zones sont positionnées de telle façon qu'elles coopèrent pour renvoyer les rayons solaires en direction de ladite troisième zone. Par ailleurs la forme de l'enveloppe conditionne également l'angle de flux du faisceau réfléchi de rayons solaires R_{R} pour le concentrer sur la surface active des cellules photovoltaïques.

L'enveloppe peut être avantageusement en polyuréthane complexe renforcé. Il existe à cet effet des polyuréthanes transparents aux rayons solaires. Concernant la zone réfléchissante, il peut être prévu une toile enduite d'un revêtement réfléchissant et plaquée sur ladite enveloppe en polyuréthane.

Selon une variante de l'invention, les cellules photovoltaïques sont placées à l'intérieur du ballon et reçoivent directement les rayons solaires concentrés. Elles peuvent dans ce cas, être collées sur l'enveloppe. Cette configuration présente l'intérêt d'assurer un très bon rendement et permet d'éviter une usure prématurée de la portion d'enveloppe transparente puisque celle-ci n'est pas échauffée par les rayons solaires réfléchis et concentrés à ce niveau de l'enveloppe. Selon cette variante il peut être prévu des moyens de refroidissement couplés auxdites cellules photovoltaïques

Selon une variante de l'invention, les cellules photovoltaïques sont placées sur l'enveloppe à l'extérieur du ballon, l'énergie solaire concentrée passant alors à travers une autre portion transparente de l'enveloppe que la première zone dédiée à la capture des rayons solaires. Le refroidissement desdites cellules est favorisé puisque l'échauffement des cellules photovoltaïques a lieu en extérieur et bénéficie ainsi d'une ventilation naturelle. Il peut dans ce cas être prévu avantageusement une seconde peau pour protéger l'enveloppe, dans la mesure où celle-ci reçoit un faisceau concentré de rayons solaires. Des films de polyuréthanes particuliers peuvent être utilisés à cet effet.

Selon une variante de l'invention, les cellules photovoltaïques sont intégrées à l'enveloppe du ballon. A cet effet, il est réalisé une ouverture dans l'enveloppe dans laquelle on vient intégrer lesdites cellules photovoltaïques. Un joint est dans ce cas utilisé pour assurer l'étanchéité entre la portion de l'enveloppe constituée par les cellules photovoltaïques et les autres portions de l'enveloppe.

Quelle que soit la variante utilisée, la zone réfléchissante ZR de l'enveloppe, peut avoir la forme de l'enveloppe : dans ce cas la forme de l'enveloppe est choisie de façon à optimiser à la fois la portance du ballon et la convergence optique des rayons solaires vers les cellules photovoltaïques.

Selon une variante de l'invention, l'enveloppe peut comprendre une première peau et une seconde peau comprenant la zone réfléchissante ZR, de façon à pouvoir avoir une forme différente de celle de l'enveloppe. Dans ce cas, la forme de l'enveloppe et celle de la surface réfléchissante peuvent être choisies indépendamment. La forme de l'enveloppe peut être adaptée pour optimiser la portance, la forme de la surface réfléchissante étant choisie pour des raisons optiques seulement. Dans ce cas et avantageusement, la zone réfléchissante peut être déformable, de façon à optimiser sa forme en tenant compte également de l'angle d'incidence des rayons solaires. Cet angle peut varier en fonction de l'heure de la journée, de la saison, de l'altitude et de la position géographique du ballon.

De manière générale, la forme de l'enveloppe est préférablement de révolution. Une forme ellipsoïde pour l'enveloppe est adaptée pour assurer une portance et une performance optique satisfaisantes, en particulier si la surface réfléchissante est la même que celle de l'enveloppe. Alternativement l'enveloppe peut être de forme parabolique.

Les formes habituelles des ballons pouvant être aussi bien sphériques que paraboliques, peuvent être utilisées, en particulier si la forme de la zone réfléchissante est indépendante de la forme de l'enveloppe.

La forme de la zone réfléchissante est préférablement parabolique.

De manière générale, la configuration de l'enveloppe conduit à conférer à la zone réfléchissante qui en fait partie un pouvoir de concentration des rayons solaires en direction des cellules photovoltaïques. Le facteur de concentration peut être ajustable, typiquement il peut être supérieur à 1 et inférieur à 5, variant avec l'heure du jour, puisque l'angle θ des rayons solaires varie avec l'heure du jour.

La concentration géométrique du soleil permet ainsi de réduire la surface de cellules photovoltaïques de façon significative et par suite la masse associée.

Selon une variante, le ballon stratosphérique peut également comprendre plus d'une zone réfléchissante, les différentes zones réfléchissantes coopérant entre elle et la surface active des panneaux photovoltaïques.

### Exemple de ballon stratosphérique :

Compte-tenu de la masse à embarquer à bord d'un ballon stratosphérique pour une mission donnée, on définit un volume nécessaire d'enveloppe à gonfler à l'hélium par exemple, et les calculs de portance conditionnent la forme et donc la surface adéquate du ballon. Le ballon présente un volume de l'ordre de 50000 m³ et une masse portée de l'ordre de 4 tonnes, il comprend une enveloppe de forme parabolique, une première partie de l'enveloppe est constituée de polyuréthane complexe transparent aux rayons solaires, une seconde partie également de forme parabolique de l'enveloppe comprend un revêtement réfléchissant, la troisième partie de l'enveloppe comprend un ensemble de cellules photovoltaïques collées sur ladite enveloppe

## Revendications

1. Ballon équipé de moyens photovoltaïques présentant une face active destinée à recevoir des rayons solaires et comprenant une enveloppe **caractérisé en ce que** l'enveloppe comprend au moins :
- une première zone transparente (ZT) aux rayons solaires ;
- une seconde zone réfléchissante (ZR) pour lesdits rayons solaires ;
- une troisième zone (ZC) comprenant lesdits moyens photovoltaïques dont la face active est dirigée vers l'intérieur de ladite enveloppe ;
- les seconde et troisième zones étant positionnées et coopérant de manière à renvoyer les rayons solaires en direction de ladite troisième zone.

2. Ballon équipé de moyens photovoltaïques selon la revendication 1, **caractérisé en ce que** les moyens photovoltaïques sont des panneaux photovoltaïques.

3. Ballon équipé de moyens photovoltaïques selon l'une des revendications 1 ou 2, **caractérisé en ce qu'il** comprend au moins :
- une première zone réfléchissante et une seconde zone réfléchissante, ladite première zone réfléchissante renvoyant les rayons solaires en direction de ladite seconde zone réfléchissante ;
- ladite seconde zone réfléchissante et ladite troisième zone étant positionnées pour coopérer de manière à renvoyer les rayons solaires en direction de ladite troisième zone.

4. Ballon équipé de moyens photovoltaïques selon l'une des revendications précédentes, **caractérisé en ce que** les moyens photovoltaïques sont positionnés à l'extérieur de l'enveloppe.

5. Ballon équipé de moyens photovoltaïques selon la revendication 4, **caractérisé en ce qu'il** comprend en outre une sous-enveloppe localisée au niveau de ladite troisième zone permettant de protéger ladite troisième zone du rayonnement réfléchi concentré de rayons solaires.

6. Ballon équipé de moyens photovoltaïques selon l'une des revendications 1 à 3, **caractérisé en ce que** les moyens photovoltaïques sont positionnés à l'intérieur de l'enveloppe.

7. Ballon équipé de moyens photovoltaïques selon l'une des revendications 1 à 3, **caractérisé en ce que** les moyens photovoltaïques sont positionnés dans une ouverture réalisée dans l'enveloppe.

8. Ballon équipé de moyens photovoltaïques selon la revendication 7, **caractérisé en ce qu'il** comporte en outre un joint d'étanchéité entre ladite enveloppe et lesdits moyens photovoltaïques.

9. Ballon équipé de moyens photovoltaïques selon l'une des revendications 1 à 8, **caractérisé en ce que** la zone réfléchissante présente une forme apte à concentrer les rayons solaires en direction de ladite troisième zone.

10. Ballon équipé de moyens photovoltaïques selon l'une des revendications 1 à 9, **caractérisé en ce que** l'enveloppe présente une forme parabolique.

11. Ballon équipé de moyens photovoltaïques selon l'une des revendications 1 à 10, **caractérisé en ce que** la zone réfléchissante présente une surface parabolique.

12. Ballon équipé de moyens photovoltaïques selon la revendication 11, **caractérisé en ce que** l'enveloppe comprend une première peau et une seconde peau, la forme de la première peau de l'enveloppe et la forme de la seconde peau de l'enveloppe comprenant la zone réfléchissante sont différentes, la forme de la première peau de l'enveloppe étant optimisée pour la portance, la forme de la seconde peau de l'enveloppe étant optimisée pour la concentration des rayons solaires.

## Patentansprüche

1. Ballon, der mit photovoltaischen Mitteln ausgestattet ist, die eine aktive Fläche zum Aufnehmen von Sonnenstrahlen aufweisen und eine Hülle umfassen, **dadurch gekennzeichnet, dass** die Hülle wenigstens Folgendes umfasst:
- eine erste für Sonnenstrahlen transparente Zone (ZT);
- eine zweite die Sonnenstrahlen reflektierende Zone (ZR);
- eine dritte Zone (ZC), die die photovoltaischen Mittel umfasst, deren aktive Fläche in Richtung auf das Innere der Hülle gerichtet ist;
- wobei die zweite und dritte Zone so positioniert sind und zusammenwirken, dass die Sonnenstrahlen in Richtung auf die dritte Zone gestrahlt werden.

2. Mit photovoltaischen Mitteln ausgestatteter Ballon nach Anspruch 1, **dadurch gekennzeichnet, dass** die photovoltaischen Mittel photovoltaische Platten sind.

3. Mit photovoltaischen Mitteln ausgestatteter Ballon nach Anspruch 1 oder 2, **dadurch gekennzeichnet, dass** er wenigstens Folgendes umfasst:
- eine erste reflektierende Zone und eine zweite reflektierende Zone, wobei die erste reflektierende Zone die Sonnenstrahlen in Richtung auf die zweite reflektierende Zone zurückstrahlt;
- wobei die zweite reflektierende Zone und die dritte Zone so positioniert sind, dass sie zum Zurückstrahlen der Sonnenstrahlen in Richtung auf die dritte Zone zusammenwirken.

4. Mit photovoltaischen Mitteln ausgestatteter Ballon nach einem der vorherigen Ansprüche, **dadurch gekennzeichnet, dass** die photovoltaischen Mittel auf der Außenseite der Hülle positioniert sind.

5. Mit photovoltaischen Mitteln ausgestatteter Ballon nach Anspruch 4, **dadurch gekennzeichnet, dass** er ferner eine Teilhülle umfasst, die in der dritten Zone positioniert ist und es zulässt, die dritte Zone vor konzentrierten reflektierten Sonnenstrahlungen zu schützen.

6. Mit photovoltaischen Mitteln ausgestatteter Ballon nach einem der Ansprüche 1 bis 3, **dadurch gekennzeichnet, dass** die photovoltaischen Mittel im Innern der Hülle positioniert sind.

7. Mit photovoltaischen Mitteln ausgestatteter Ballon nach einem der Ansprüche 1 bis 3, **dadurch gekennzeichnet, dass** die photovoltaischen Mittel in einer in der Hülle realisierten Öffnung positioniert sind.

8. Mit photovoltaischen Mitteln ausgestatteter Ballon nach Anspruch 7, **dadurch gekennzeichnet, dass** er ferner eine Dichtung zwischen der Hülle und den fotovoltaischen Mitteln umfasst.

9. Mit photovoltaischen Mitteln ausgestatteter Ballon nach einem der Ansprüche 1 bis 8, **dadurch gekennzeichnet, dass** die reflektierende Zone eine Form ausweist, die die Sonnenstrahlen in Richtung auf die dritte Zone konzentrieren kann.

10. Mit photovoltaischen Mitteln ausgestatteter Ballon nach einem der Ansprüche 1 bis 9, **dadurch gekennzeichnet, dass** die Hülle eine parabolische Form aufweist.

11. Mit photovoltaischen Mitteln ausgestatteter Ballon nach einem der Ansprüche 1 bis 10, **dadurch gekennzeichnet, dass** die reflektierende Zone eine parabolische Oberfläche aufweist.

12. Mit photovoltaischen Mitteln ausgestatteter Ballon nach Anspruch 11, **dadurch gekennzeichnet, dass** die Hülle eine erste Haut und eine zweite Haut umfasst, wobei die Form der ersten Haut der Hülle und die Form der zweiten Haut der Hülle, die die reflektierende Zone umfasst, unterschiedlich sind, wobei die Form der ersten Haut der Hülle für Auftrieb optimiert ist, wobei die Form der zweiten Haut der Hülle zum Konzentrieren der Sonnenstrahlen optimiert ist.

## Claims

1. Balloon provided with photovoltaic means having an active face which is intended to receive solar rays and comprising an envelope, **characterised in that** the envelope comprises at least:
- a first transparent zone (ZT) with respect to solar rays;
- a second reflective zone (ZR) for the solar rays;
- a third zone (ZC) comprising the photovoltaic means whose active face is directed towards the inner side of the envelope;
- the second and third zones being positioned and cooperating so as to reflect the solar rays in the direction of the third zone.

2. Balloon provided with photovoltaic means according to claim 1, **characterised in that** the photovoltaic means are photovoltaic panels.

3. Balloon provided with photovoltaic means according to either claim 1 or claim 2, **characterised in that** it comprises at least:
- a first reflective zone and a second reflective zone, the first reflective zone transmitting the solar rays in the direction of the second reflective zone;
- the second reflective zone and the third reflective zone being positioned in order to cooperate so as to reflect the solar rays in the direction of the third zone.

4. Balloon provided with photovoltaic means according to any one of the preceding claims, **characterised in that** the photovoltaic means are positioned outside the envelope.

5. Balloon provided with photovoltaic means according to claim 4, **characterised in that** it further comprises a sub-envelope which is located in the region of the third zone allowing the third zone to be protected from the concentrated, reflected radiation of solar rays.

6. Balloon provided with photovoltaic means according to any one of claims 1 to 3, **characterised in that** the photovoltaic means are positioned inside the envelope.

7. Balloon provided with photovoltaic means according to any one of claims 1 to 3, **characterised in that** the photovoltaic means are positioned in an opening formed in the envelope.

8. Balloon provided with photovoltaic means according to claim 7, **characterised in that** it further comprises a sealing joint between the envelope and the photovoltaic means.

9. Balloon provided with photovoltaic means according to any one of claims 1 to 8, **characterised in that** the reflective zone has a shape capable of concentrating the solar rays in the direction of the third zone.

10. Balloon provided with photovoltaic means according to any one of claims 1 to 9, **characterised in that** the envelope has a parabolic shape.

11. Balloon provided with photovoltaic means according to any one of claims 1 to 10, **characterised in that** the reflective zone has a parabolic surface.

12. Balloon provided with photovoltaic means according to claim 11, **characterised in that** the envelope comprises a first skin and a second skin, the shape of the first skin of the envelope and the shape of the second skin of the envelope comprising the reflective zone are different, the shape of the first skin of the envelope being optimised for the lift, the shape of the second skin of the envelope being optimised for the concentration of the solar rays.
